# FASCICULE DE BREVET EUROPEEN

(11) **EP 0 434 497 B1**
(45) Date de publication et mention de la délivrance du brevet: **24.08.1994**
(21) Numéro de dépôt: 90403506.0
(22) Date de dépôt: 10.12.1990
(51) Int. Cl.: B29C 53/58, B29C 53/82, B29C 33/54

(54) **Procédé de réalisation par enroulement filamentaire d'un caisson annulaire avec raidisseurs internes**
Faserwickelverfahren zur Herstellung eines ringförmigen Hohlkörpers mit inneren Versteifungen
Filament winding method for making an annular hollow body with internal webs

(30) Priorité: 19.12.1989 FR 8916777
(43) Date de publication de la demande: 26.06.1991
(73) Titulaire: AEROSPATIALE Société Nationale Industrielle, 75781 Paris Cédex 16 (FR)
(72) Inventeur: Blavignac Guy, F-33260 La Teste (FR); Dessaut, Jean, F-33000 Bordeaux (FR); Godin, Patrick, F-33460 Arsac (FR); Pavec, Jean-Luc, F-33460 Margaux (FR)
(74) Mandataire: Lhuillier, René

(56) Documents cités:
- EP-A- 0 165 163
- DE-A- 3 316 539

## Description

L'invention se rapporte à une structure porteuse et concerne plus précisément un procédé de réalisation par enroulement filamentaire d'un caisson annulaire fermé monobloc de section creuse intégrant des éléments raidisseurs internes, lui permettant de travailler sous des sollicitations mécaniques complexes et ayant une masse minimale pour un encombrement et une raideur imposés.

Ce type de pièce se présente couramment sous forme de structure métallique en treillis ou caisson, composée d'un assemblage d'éléments reliés entre eux par des liaisons mécano-soudées, ou rivetées, ou boulonnées etc..., ce qui conduit généralement à des armatures de conception complexe. L'inconvénient de ce mode de fabrication réside dans son coût élevé résultant d'une consommation de matière et de temps importante, pour notamment l'usinage des éléments, leur montage et leur assemblage, compte tenu également des difficultés d'automatisation.

Pour pallier à ces inconvénients on a pensé à réaliser ces pièces à partir de matériaux du genre résine renforcé par des fibres, qui présentent l'avantage de faire gagner du poids à la structure. A cet effet, et pour faciliter la fabrication des structures de forme complexe, il a été imaginé, comme décrit dans le FR-A 2565159 au nom de la Demanderesse, un procédé de fabrication selon lequel on décompose l'armature à fabriquer en une pluralité de pièces élémentaires susceptibles d'être réalisées séparément par enroulement filamentaire. Ainsi certaines de ces pièces élémentaires sont réalisées sur des mandrins de forme, desquels elles sont extraites et usinées pour être assemblées en sous-ensembles. D'autres, en revanche, sont réalisées par enroulement filamentaire sur un mandrin dont au moins une partie est constituée par lesdits sous-ensembles.

Par rapport à une version métallique on peut ainsi diminuer la masse de la structure de 30 %, et réduire le coût de réalisation par le fait que l'on diminue le nombre de pièces à assembler, que l'on simplifie la géométrie des pièces en question, que l'on réduit de façon importante les usinages et que l'on simplifie les liaisons. En outre la matière et les outillages mis en oeuvre sont minimisés. Cette version obtenue par enroulement filamentaire présente également l'avantage de limiter considérablement les problèmes de corrosion.

Il y a toutefois une réalisation de pièce spécifique que ledit procédé connu ne permet pas d'obtenir aisément, et qui est une pièce annulaire de section creuse fermée et équipée de raidisseurs internes.

C'est donc un objet de la présente invention de proposer un procédé particulier de réalisation de cette pièce annulaire par enroulement filamentaire destiné à s'intégrer dans une structure plus complexe.

L'invention se rapporte par conséquent à un procédé de réalisation par enroulement filamentaire d'un caisson annulaire équipé de raidisseurs internes selon le préambule de la revendication 1 basé sur le FR-A 2 565 159, procédé qui consiste essentiellement :
- à réaliser séparément par enroulement filamentaire la paroi interne du caisson annulaire sur un mandrin primaire,
- à fixer sur cette paroi des éléments raidisseurs préfabriqués indépendamment,
- à juxtaposer au mandrin primaire un mandrin intercalaire disposé entre les éléments raidisseurs,
- à réaliser par dessus ledit mandrin intercalaire et par enroulement filamentaire les parois latérales et externes du caisson,
- et après polymérisation et usinage, éliminer dans le caisson monobloc obtenu, les éléments de mandrins intercalaires restés prisonniers du caisson.

Selon une caractéristique particulière de l'invention, la mandrin primaire est supporté par une jante circulaire portée par un moyeu par l'intermédiaire de potences radiales, et constitué par du sable aggloméré maintenu par une pluralité de tubes d'ancrage. Avantageusement la paroi interne du caisson annulaire est constituée d'un bobinage circonférentiel et d'un bobinage satellite à couches inclinées. Selon une autre caractéristique de l'invention, chaque élément raidisseur est réalisé d'une part par enroulement filamentaire sur un mandrin de voiles radiaux et d'autre part par enroulement filamentaire sur un mandrin d'inserts suivi de l'engagement desdits inserts à chaque extrémité d'un voile radial, à l'intérieur de son espace creux.

Selon l'invention également, on fixe sur les tubes d'ancrage un tube de positionnement percé de petits orifices qui s'étend dans les zones intermédiaires entre les éléments raidisseurs, et qui est destiné à maintenir le mandrin intercalaire, l'enroulement des parois latérales et externes du caisson au-dessus du mandrin intercalaire étant suivi d'une découpe, après polymérisation des bourrelets au niveau de découpe recherchée. On notera que l'élimination des parties de mandrin en sable qui constituent le mandrin intercalaire est obtenue par injection d'eau par le tube de positionnement et ses orifices.

D'autres caractéristiques particulières et les avantages de l'invention ressortiront de la description qui va suivre d'exemples de réalisations, faisant références aux dessins annexés qui représentent :
figure 1 une vue schématique en coupe transversale d'un caisson annulaire fermé,
figure 2 une vue en perspective éclatée d'un élément raidisseur,
figure 3 une vue en coupe partielle du mandrin primaire,
figure 4 une vue schématique du type de bobinage de la paroi interne du caisson,
figure 5 une vue du mandrin primaire équipé d'éléments raidisseurs,
figure 6 une vue partielle du mandrin intercalaire,
figure 7 une vue des mandrins primaire et intercalaire,
figure 8 une vue schématique en coupe transversale d'un caisson avant découpe des bourrelets.

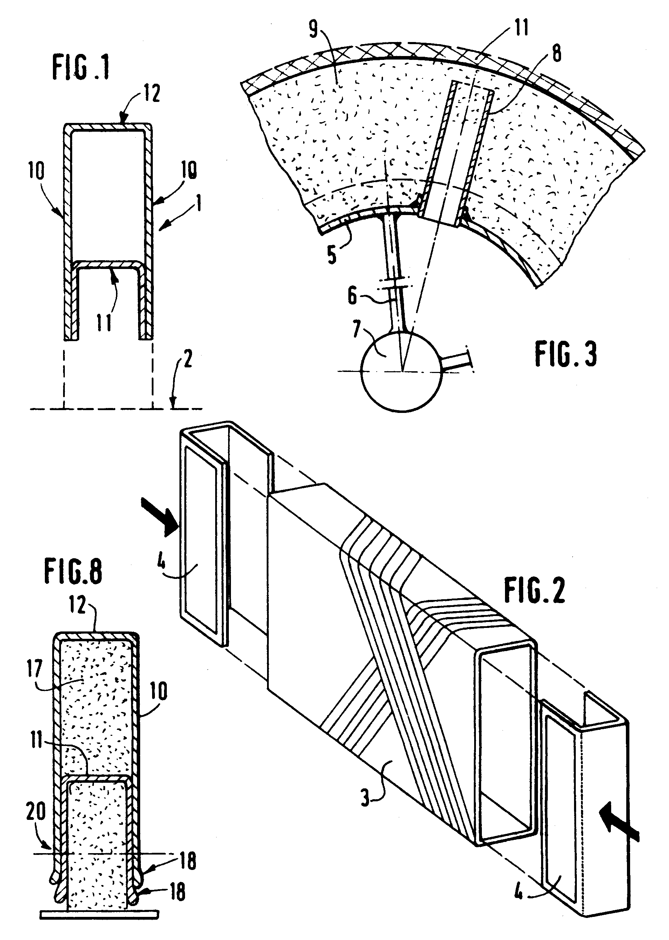

On a représenté à la figure 1 une partie d'un caisson annulaire 1 fermé, d'axe 2, réalisé en matériau composite, du genre fibre continue haute performance enrobée de résine époxy. Le caisson 1 est creux, de section radiale rectangulaire. Il est limité par des parois latérales 10, une paroi interne 11 et une paroi interne 12. C'est ce caisson qu'il s'agit de réaliser en y incorporant dans l'espace creux des éléments raidisseurs, constitués de voiles radiaux de forme rectangulaire. La fibre utilisée est avantageusement du carbone haut-module associé à une résine époxy, couple qui permet d'atteindre au mieux les objectifs de masse et de raideur. On utilise pour cela essentiellement le procédé d'enroulement filamentaire mis en oeuvre sur une machine à commande numérique garantissant les paramètres de définition (orientation des fibres et épaisseurs) et par là même leur reproductibilité.

La figure 2 illustre un mode de réalisation d'un tel élément raidisseur. Il consiste en premier lieu à réaliser par enroulement filamentaire sur un mandrin de forme adaptée des voiles radiaux 3, de section rectangulaire, suivie de la polymérisation, de l'usinage et de l'extraction du mandrin.

Puis on réalise les inserts d'extrémité 4 de ces voiles suivant le même procédé. Pour terminer on engage les inserts 4 à chaque extrémité du voile 3 et à l'intérieur de son espace creux comme le montrent les flèches.

La figure 3 illustre le mode de réalisation par enroulement filamentaire de la paroi interne du caisson annulaire. Le mandrin primaire utilisé à cet effet est supporté par une jante circulaire métallique 5 montée sur une série de potences radiales 6 portées par un moyeu central 7 servant au support et à l'entraînement en rotation sur la la machine tournante. Un tube d'ancrage 8 vissé sur la partie convexe de la jante 5 sert notamment à maintenir le sable aggloméré qui constitue ce mandrin primaire 9. On forme par enroulement filamentaire sur le mandrin suivi de polymérisation, la paroi interne 11 du caisson 1.

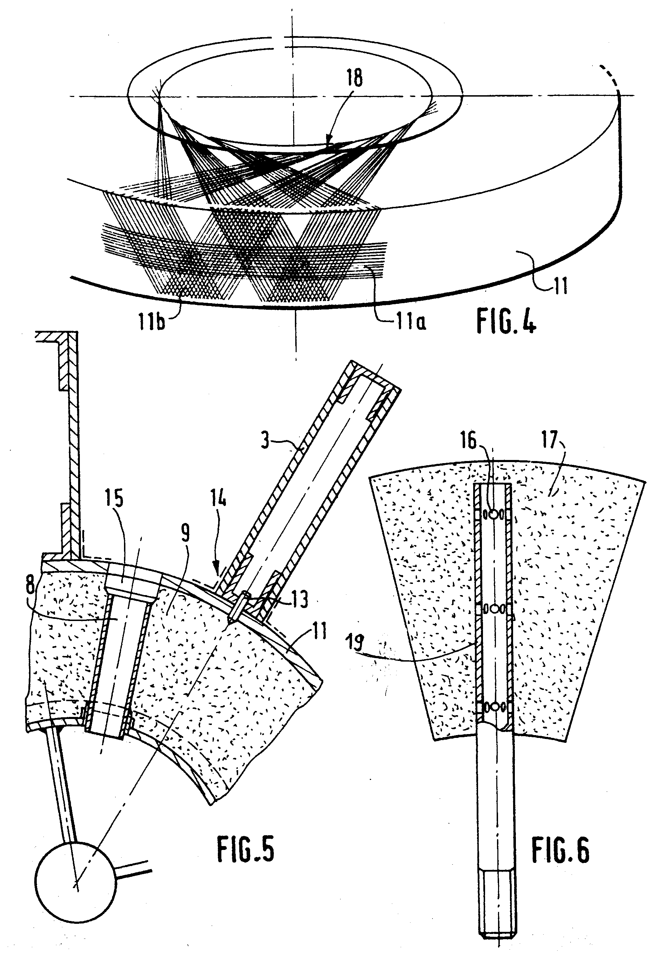

On a représenté à la figure 4 à titre d'exemple de réalisation un type de bobinage dit "cycloprofil" de la paroi interne 11 du caisson constitué d'un bobinage circonférentiel 11a et d'un bobinage satellite 11b à couches inclinées, qui entraîne la formation de bourrelets 18 au niveau du rond central.

Une fois terminée cette paroi interne de caisson, il convient de réaliser les parois latérales et la paroi externe du caisson.

On commence d'abord, comme on le voit à la figure 5, à fixer sur la paroi externe du mandrin, c'est-à-dire sur la paroi interne 11 du caisson, les éléments raidisseurs 3 préalablement réalisés. Ces éléments sont collés transversalement au mandrin primaire 9, ou fixés par des tenons 13 à l'extérieur de la paroi 11. Un adhésif de renforcement 14 est avantageusement appliqué à la jointure des deux pièces. En outre un trou de passage 15 est foré dans la paroi, au droit des tubes d'ancrage 8.

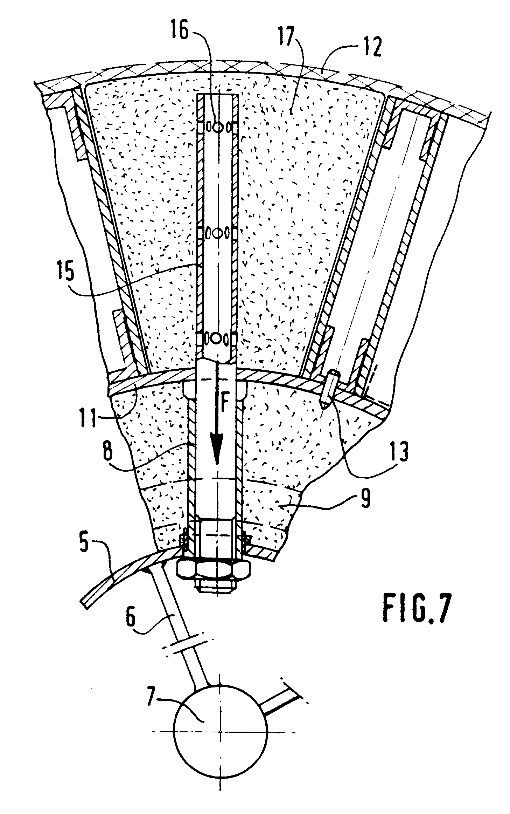

Le tube d'ancrage 8 reçoit ensuite un tube de positionnement 19 percé de petits orifices 16, qui s'étend dans les zones intermédiaires entre les éléments raidisseurs et sert à maintenir un mandrin intercalaire 17, par exemple constitué de sable aggloméré par un liant soluble à l'eau (figures 6 et 7).

On peut alors réaliser par enroulement filamentaire les parois latérales 10 et les parois externe 12 du caisson , autour de ce mandrin intercalaire 17. L'enroulement est suivi d'une polymérisation, puis, comme l'illustre la figure 8, d'une découpe des petits bourrelets 18 dus au bobinage des cycloprofils, au niveau 20 de découpe recherchée. En injectant de l'eau par le tube de positionnement 19 et les orifices 16, on élimine les parties de mandrin en sable qui constituent le mandrin intercalaire. Il reste alors à dégager les tubes de positionnement 19 du mandrin intercalaire, par le tube d'ancrage 8 dans le sens de la flèche F, puis les tubes d'ancrage eux-mêmes. La paroi interne du caisson comportera donc des trous qu'il sera aisé d'obturer par exemple par des bouchons collés.

## Revendications

1. Procédé de réalisation par enroulement filamentaire d'un caisson annulaire équipé de raidisseurs internes, caractérisé en ce qu'il consiste essentiellement :
- à réaliser séparément par enroulement filamentaire la paroi interne (11) du caisson annulaire (1) sur un mandrin primaire (9),
- à fixer sur cette paroi des éléments raidisseurs (3, 4) préfabriqués indépendamment,
- à juxtaposer au mandrin primaire un mandrin intercalaire (17) disposé entre les éléments raidisseurs,
- à réaliser par dessus ledit mandrin intercalaire et par enroulement filamentaire les parois latérales (10) et externes (12) du caisson,
- et après polymérisation et usinage, éliminer dans le caisson monobloc obtenu, les éléments de mandrins intercalaires restés prisonniers du caisson.

2. Procédé selon la revendication 1, caractérisé en ce que le mandrin primaire (9) est supporté par une jante circulaire (5) portée par un moyeu (7) par l'intermédiaire de potences radiales (6), et constitué par du sable aggloméré maintenu par une pluralité de tubes d'ancrage (8).

3. Procédé selon les revendications 1 et 2, caractérisé en ce que la paroi interne (11) du caisson annulaire (1) est constituée d'un bobinage circonférentiel (11a) et d'un bobinage satellite (11b) à couches inclinées formant des bourrelets (18) au niveau de la jante (5).

4. Procédé selon la revendication 1, caractérisé en ce que chaque élément raidisseur est réalisé d'une part par enroulement filamentaire sur un mandrin de voiles radiaux (3), et d'autre part par enroulement filamentaire sur un mandrin d'inserts (4), suivi de l'engagement desdits inserts à chaque extrémité d'un voile radial, à l'intérieur de son espace creux.

5. Procédé selon les revendications 1 et 4, caractérisé en ce qu'un adhésif de renforcement (14) est appliqué à la jointure de chaque élément raidisseur (3, 4) et la paroi interne (11) du caisson annulaire (1).

6. Procédé selon les revendications 1 et 2, caractérisé en ce qu'on fixe sur les tubes d'ancrage (8) un tube de positionnement (19) percé de petits orifices (16) qui s'étend dans les zones intermédiaires entre les éléments raidisseurs (3, 4), et qui est destiné à maintenir le mandrin intercalaire (17).

7. Procédé selon les revendications 1 et 3, caractérisé en ce que l'enroulement des parois latérales (10) et externes (12) du caisson au-dessus du mandrin intercalaire (17) est suivi d'une découpe, après polymérisation, des bourrelets (18) au niveau (20) de découpe recherchée.

8. Procédé selon la revendication 1, caractérisé en ce que l'élimination des parties de mandrin en sable qui constituent le mandrin intercalaire (17) est obtenue par injection d'eau par le tube de positionnement (19) et les orifices (16).

## Claims

1. Filament winding method for producing an annular hollow body equipped with internal stiffeners, characterised in that it consists essentially of:
- separately producing by filament winding the inner wall (11) of the annular hollow body (1) on a primary mandrel (9),
- securing to this wall independently prefabricated stiffening elements (3,4),
- placing next to the primary mandrel an interpolated mandrel (17) arranged between the stiffening elements,
- producing on top of the said interpolated mandrel, by filament winding, the lateral (10) and outer walls (12) of the hollow body,
- and after polymerisation and machining, removing from the single-piece hollow body obtained the interpolated mandrel elements remaining enclosed in the hollow body.

2. Method according to Claim 1, characterised in that the primary mandrel (9) is supported by a circular rim (5) borne by a hub (7) by way of radial brackets (6) and constituted by agglomerated sand maintained by a plurality of anchoring tubes (8).

3. Method according to Claims 1 and 2, characterised in that the inner wall (11) of the annular hollow body (1) is constituted by a circumferential winding (11a) and a satellite winding (11b) with slanted layers forming flanges (18) at the level of the rim (5).

4. Method according to Claim 1, characterised in that each stiffening element is produced on the one hand by filament winding, on a mandrel, of radial webs (3), and on the other hand by filament winding, on a mandrel, of inserts (4), followed by the engagement of the said inserts at each end of a radial web, inside its hollow space.

5. Method according to Claims 1 and 4, characterised in that a reinforcing adhesive (14) is applied to the junction of each stiffening element (3, 4) with the inner wall (11) of the annular hollow body (1).

6. Method according to Claims 1 and 2, characterised in that there is secured to the anchoring tubes (8) a positioning tube (19) which is pierced with small openings (16) and extends into the intermediate zones between the stiffening elements (3, 4), and which is intended to support the interpolated mandrel (17).

7. Method according to Claims 1 and 3, characterised in that the winding of the lateral (10) and outer walls (12) of the hollow body on top of the interpolated mandrel (17) is following by cutting, after polymerisation, of the flanges (18) at the desired cutting level (20).

8. Method according to Claim 1, characterised in that the removal of the portions of sand mandrel constituting the interpolated mandrel (17) is achieved by injecting water through the positioning tube (19) and the openings (16).

## Patentansprüche

1. Faserwickelverfahren zur Herstellung eines mit inneren Versteifungen versehenen, ringförmigen Hohlkörpers, dadurch gekennzeichnet, daß es im wesentlichen daraus besteht:
- die Innenwand (11) des ringförmigen Hohlkörpers (1) separat durch Faserwicklung auf einer primären Wickelhülse (9) herzustellen,
- auf dieser Wand unabhängig vorgefertige Versteifungselemente (3, 4) zu befestigen,
- angrenzend an die primäre Wickelhülse eine zwischen den Versteifungselementen angeordnete zwischenliegende Wickelhülse (17) anzubringen,
- über der zwischenliegenden Wickelhülse durch Faserwicklung die Seiten(10)-und Außenwände (12) des Hohlkörpers herzustellen,
- und nach einer Polymerisation und Bearbeitung die in dem Hohlkörper eingeschlossen verbliebenen Elemente der zwischenliegenden Wickelhülsen in dem erhaltenen einstückigen Hohlkörper zu eliminieren.

2. Verfahren nach Anspruch 1, dadurch gekennzeichnet, daß die primäre Wickelhülse (9) von einer kreisförmigen Felge (5), die über radiale Arme (6) an einer Nabe (7) abgestützt ist, getragen und durch gepreßten Sand gebildet wird, der von einer Mehrzahl von Verankerungsrohren (8) gehalten wird.

3. Verfahren nach den Ansprüchen 1 und 2, dadurch gekennzeichnet, daß die Innenwand (11) des ringförmigen Hohlkörpers (1) von einer Umfangsbewicklung (11a) und einer Satellitenbewicklung (11b) mit schräg verlaufenden Schichten gebildet wird, die auf Höhe der Felge (5) Wülste (18) bilden.

4. Verfahren nach Anspruch 1, dadurch gekennzeichnet, daß jedes Versteifungselement einerseits durch Faserwicklung auf eine Wickelhülse für radiale Schalenkörper (3) und andererseits durch Faserwicklung auf eine Wickelhülse für Einschubteile (4), gefolgt vom Einsetzen der Einschubteile an jedem Ende eines radialen Schalenkörpers ins Innere seines Hohlraumes, herstellt wird.

5. Verfahren nach dem Ansprüchen 1 und 4, dadurch gekennzeichnet, daß ein verstärkendes Klebemittel (14) an der Verbindungsstelle jedes Versteifungselementes (3, 4) und der Innenwand (11) des ringförmigen Hohlkörpers (1) angebracht wird.

6. Verfahren nach den Ansprüchen 1 und 2, dadurch gekennzeichnet, daß auf den Verankerungsrohren (8) ein von kleinen Öffnungen (16) durchbohrtes Positionierungsrohr (19) befestigt wird, das sich in den zwischenliegenden Bereichen zwischen den Versteifungselementen (3, 4) erstreckt und dazu dient, die zwischenliegende Wickelhülse (17) zu halten.

7. Verfahren nach den Ansprüchen 1 und 3, dadurch gekennzeichnet, daß der Wicklung der Seiten(10)- und Außenwände (12) des Hohlkörpers oberhalb der zwischenliegenden Wickelhülse (17) nach einer Polymerisation ein Beschneiden der Wülste (18) auf das gewünschte Wulstniveau (20) folgt.

8. Verfahren nach Anspruch 1, dadurch gekennzeichnet, daß die Eliminierung der Teile der Wickelhülse aus Sand, welche die zwischenliegende Wickelhülse (17) bilden, durch Einspritzen von Wasser durch das Positionierungsrohr (19) und die Öffnungen (16) erreicht wird.
